# EUROPÄISCHE PATENTSCHRIFT

(11) **EP 2 385 264 B1**
(45) Veröffentlichungstag und Bekanntmachung des Hinweises auf die Patenterteilung: **22.05.2019**
(21) Anmeldenummer: 11160936.8
(22) Anmeldetag: 04.04.2011
(51) Int. Cl.: F16D 13/58

(54) **Kupplungsbaugruppe mit Verschleißausgleich**
Coupling assembly with wear compensation
Ensemble d'embrayage doté d'une compensation d'usure

(30) Priorität: 04.05.2010 DE 102010028538
(43) Veröffentlichungstag der Anmeldung: 09.11.2011
(73) Patentinhaber: ZF Friedrichshafen AG, 88046 Friedrichshafen (DE)
(72) Erfinder: Schömig, Peter, 97222 Rimpar (DE); Greubel, Marco, 97714 Oerlenbach (DE)

(56) Entgegenhaltungen:
- DE-A1-102007 053 161
- DE-A1-102007 053 724
- DE-C2- 3 017 855
- GB-A- 1 511 745
- US-A- 2 117 527
- US-A- 4 095 683

## Beschreibung

Vorliegende Erfindung betrifft eine Kupplungsbaugruppe, insbesondere für eine Reibungskupplung eines Kraftfahrzeugs, mit zumindest einem Kupplungsgehäuse, in dem eine auf eine Druckplatte wirkende Membranfeder angeordnet ist, die am Kupplungsgehäuse mittels eines Halterings mit umfänglich verteilten axial vom Haltering abstehenden Haltelaschen festgelegt ist, wobei die Haltelaschen dazu ausgelegt sind, einen axialen Anschlag zu definieren, und wobei zwischen zwei benachbarten Bauteilen der Kupplungsbaugruppe, die zwischen dem Haltering und dem axialen Anschlag der Haltelaschen angeordnet sind, ein Federelement angeordnet ist, das eine axiale Federkraft auf die benachbarten Bauteile ausübt.

Bei durch Druck betätigten Druckplatten insbesondere von Kraftfahrzeug-Reibungskupplungen stellt sich bei Vorrichtungen der oben genannten Art über die Gebrauchsdauer der Kupplung ein Verschleiß der Membranfederauflagen ein. Durch diesen Verschleiß wird der Abhub der Druckplatte verringert. Wird der zu erwartende Verschleiß bei der Auslegung der Kupplung vorgehalten, ist der Abhub der neuen Kupplung um den Verschleiß grösser als eigentlich benötigt. Dadurch ergibt sich eine ungünstige Übersetzung und ein schlechter Wirkungsgrad mit entsprechend großer Ausrückkraft.

Wird dagegen der Verschleiß nicht berücksichtigt, reduziert die durch den Verschleiß entstehende Luft zwischen der Membranfeder und den umgebenden Bauteilen den Abhub der Druckplatte. Eine Folge des reduzierten Abhubs kann eine Fehlfunktion der Druckplatte sein, d.h. die Kupplung kann nicht mehr getrennt werden. Dies bedeutet aber gleichzeitig, dass ein Gangwechsel nicht mehr möglich ist, so dass das Kraftfahrzeug unter Umständen abgeschleppt werden muss.

Es ist deshalb im Stand der Technik vorgeschlagen worden, den Auflagenverschleiß durch vorgespannte elastische Elemente in Form einer Ringfeder mit axialen Erhebungen oder einer Tellerfeder auszugleichen. Bei Druckplatten mit Haltering wird diese Tellerfeder oberhalb des Gehäuses unter die Laschen des Halterings eingelegt, so dass bei der Montage die Feder vorgespannt wird. Kommt es zu einem Verschleiß, entspannt sich die Tellerfeder um einen entsprechenden Betrag und gleicht so den Verschleiß aus.

In der DE 102007053724 und der DE 102007053161 wird eine Kupplungsvorrichtung vorgeschlagen, bei der zwischen dem Halteelemente und dem Kupplungsgehäuse oder zwischen dem Haltelemente und der Membranfeder ein ringförmiges Federelement eingesetzt ist, das axial zueinander versetzte Abschnitte aufweist, die eine axiale Kraft auf die umgebende Bauteile ausübt.

Zudem ist aus der GB 1 511 745, bekannt, das Halteelement derart auszuführen, dass es eine tellerfederartige Eigenschaft aufweist, wodurch in analoger Weise Verschleiß ausgeglichen werden kann. Eine Kupplungsanordnung gemäß dem Oberbegriff von Anspruch 1 ist aus DE 10 2007 053 724 A1 bekannt.

Nachteilig an diesen Lösungen ist jedoch, dass die Herstellung der Federn sehr aufwändig ist, insbesondere wenn dafür Sorge getragen werden soll, dass sie in der genau gewünschten Umfangslage zu liegen kommen. Auch die Montagekosten sind relativ hoch, da die gefertigten Federn bei der Montage präzise gehandhabt werden müssen, um in die richtige Montageendlage zu gelangen. Darüber hinaus ist der von den Ringfedern bereitgestellte Federweg meist zu gering.

Der vorliegenden Erfindung liegt daher die Aufgabe zugrunde, eine verschleißausgleichende Kupplungsbaugruppe für eine Reibungskupplung bereitzustellen, die kostengünstig zu fertigen und leicht zu montieren ist und einen ausreichend großen Federweg aufweist.

Diese Aufgabe wird gelöst durch eine Kupplungsbaugruppe gemäß Patentanspruch 1.

Der Erfindung liegt die Idee zugrunde, statt eines umfänglich eingesetzten Federrings einzelne federnde Elemente einzusetzen, deren Anzahl letztendlich die Gesamtfederkraft bestimmt. Die Federelemente werden jeweils an mindestens einer der Haltelaschen eines die Membranfeder an einem Kupplungsgehäuse festlegenden Halterings angeordnet. Dabei werden die Federelemente derart zwischen zwei benachbarten Bauteilen der Kupplungsbaugruppe eingesetzt, dass sie zwischen dem Haltering und dem axialen Anschlag der Haltelaschen angeordnet sind. Der axiale Anschlag der Haltelaschen kann beispielsweise in vorbekannter Weise mittels Umbiegens der Laschenenden in Richtung Kupplungsgehäuse erfolgen.

Zudem weist jedes einzelne Federelement mindestens zwei randseitige Abstützbereiche auf, die zumindest teilweise an dem einen Bauteil anliegen und weist weiterhin mindestens eine zwischen den Abstützbereichen angeordnete axiale Erhebung auf, die zumindest teilweise an dem anderen Bauteil anliegt.

Das bedeutet beispielsweise, dass das Federelement zwischen dem axialen Anschlag der Haltelaschen und dem Kupplungsgehäuse angeordnet sein kann, wobei sich die axiale Erhebung an dem axialen Anschlag der Haltelasche abstützt, während die beiden randseitigen Abstützbereiche an dem Kupplungsgehäuse anliegen. Bei der Montage wird die axiale Erhebung zusammengedrückt, so dass eine Federvorspannung in axialer Richtung zwischen dem Kupplungsgehäuse und dem axialen Anschlag der Haltelaschen entsteht. Bei Verschleiß bewirkt diese Federvorspannung, dass Kupplungsgehäuse und axialer Anschlag des Halteelements auseinandergedrückt werden, so dass zwischen Membranfeder und Kupplungsgehäuse oder einem anderen Bauteil kein Luftspalt entstehen kann.

Dabei ist es egal, ob das Federelement zwischen dem axialen Anschlag der Haltelaschen und dem Kupplungsgehäuse oder zwischen dem Haltering und der Membranfeder oder zwischen dem Kupplungsgehäuse und der Membranfeder angeordnet ist. Es kann aber auch allgemein bei nicht erfindungsgemäßen Ausführungsformen zwischen zwei anderen Bauteilen, die zwischen dem axialen Anschlag der Haltelaschen und dem Haltering angeordnet sind, vorhanden sein, da lediglich sichergestellt werden sollte, dass kein Luftspalt zwischen der Membranfeder und einem der sie umgebenden Bauteilen entsteht.

Abhängig von der Einbaulage kann die genaue Ausgestaltung des Federelements variieren, um an die baulichen Gegebenheiten angepasst zu werden. Gemein ist allen Federelementen jedoch, dass sich die axiale Erhebung des Federelements an dem einen Bauteil und die Abstützbereiche an dem anderen Bauteil abstützen.

Gemäß einer bevorzugen Ausführungsform der Erfindung, weist die axiale Erhebung mindestens eine Aussparung für mindestens eine Haltelasche auf. Dadurch kann das Federelement leicht und selbsterklärend positioniert werden, wodurch Montagefehler vermeidbar sind.

Zudem kann die Aussparung als Öffnung, insbesondere als Langloch ausgebildet sein, die von der Haltelasche durchsetzt wird. Dies hat den Vorteil, dass die beim Betrieb der Kupplung auftretenden Fliehkräfte kein Verrutschen des Federelements bewirken.

Um ein gutes Einpassen des Federelements in die Kupplung zu erreichen, ist erfindungsgemäß vorgesehen, dass das Federelement kreisringabschnittsförmig ausgebildet ist, wobei der Radius vorteilhafterweise an dem Radius benachbarten Bauteils der Kupplung angepasst ist.

Gemäß einem weiteren bevorzugten Ausführungsbeispiel weist das erfindungsgemäße Federelement an mindestens einem der randseitigen Abstützbereiche eine Führung auf, die dazu ausgelegt ist, eine Haltelasche, die der an der axialen Erhebung angeordneten Haltelasche benachbart ist, zu umgreifen. Dabei ist besonders bevorzugt, wenn beide randseitigen Abstützbereiche eine derartige Führung aufweisen. Mittels dieser Führung ist die Einbaulage des Federelements definiert, und bei den beim Betrieb der Kupplung auftretenden Fliehkräften gegen ein Verrutschen gesichert.

Da das Bereitstellen der Federvorspannung durch Niederdrücken der axialen Erhebung auch eine tangentiale Bewegung, sprich eine Verlängerung, des Federelements bewirkt, ist der Abstützbereich vorzugsweise derart gestaltet, dass eine Relativbewegung des Abstützbereichs entlang des zugehörigen Bauteils möglich ist. Gleichzeitig ermöglicht diese Beweglichkeit, dass die beim Entspannen des Federelements auftretende Rückbewegung - Verkürzung - der Abstützbereiche nicht beeinträchtig wird.

Dabei sind vorzugsweise die die Führungen dazu ausgelegt, dass sich das Federelement entlang der Haltelaschen bewegen kann.

Um eine derartige Beweglichkeit bereitzustellen, kann die Führung als randseitig offene Führung ausgebildet, so dass die Führung eine Nutform aufweist. Dies hat insbesondere den Vorteil, dass beim Einbau der Verschleißausgleichsvorrichtung keine übermäßige Sorgfalt an die umfängliche Ausrichtung gelegt werden muss, da die nutförmige Aussparung Fehlertoleranzen für den Einbau aufweist.

Statt der Nutform kann die Führung jedoch auch als Öffnung, die insbesondere als Langloch ausgebildet sein kann, aufweisen, wobei vorzugsweise die Dimensionierung an die zu erwartende Bewegung angepasst ist.

Gemäß einem weiteren vorteilhaften Ausführungsbeispiel kann das Federelement zwei oder mehr axiale Erhebungen aufweisen, die jeweils mit Aussparungen ausgestattet sein können, wobei zwischen den axialen Erhebungen jeweils ein weiterer Abschnittsbereich angeordnet ist. Vorteilhafterweise umfasst das Federelement drei bis fünf Haltelaschen. Dabei werden vorzugsweise zwei Haltelaschen von den Führungen umfasst, während die mittig angeordnete/n Haltelasche/n an der/n axialen Erhebung/en angeordnet ist/sind.

Wie bereits oben erwähnt, kann die Aussparung in der axialen Erhebung als Öffnung ausgebildet sein, die von einer Haltelasche durchsetzt ist. Es ist jedoch auch möglich, die Aussparung als radiale Einbuchtung auszubilden, so dass die Haltelasche in der Einbuchtung zu liegen kommt. Diese Ausführungsform ist insbesondere dann von Vorteil, wenn das Federelement nicht zwischen dem Kupplungsgehäuse und dem axialem Anschlag der Haltelasche angeordnet ist, sondern zwischen der Membranfeder und dem Haltering bzw. zwischen der Membranfeder und dem Kupplungsgehäuse. Dabei erstreckt sich die radiale Einbuchtung vorzugsweise über die gesamte axiale Erhebung.

Gemäß einem weiteren bevorzugten Ausführungsbeispiel sind mindestens zwei separate Federelemente vorhanden, die jeweils mindestens zwei randseitige Abstützbereiche und eine zwischen den Abstützbereichen angeordnet axiale Erhebung aufweist. Dabei sind die Federelemente derart angeordnet, dass ein axiales Kippen der Bauteile im Kupplungsgehäuse vermeidbar ist. Das bedeutet, dass die Federelemente im Wesentlichen äquidistant zueinander über den Umfang verteilt angeordnet werden. Sind beispielsweise zwei Federelemente vorgesehen, werden diese einander gegenüberliegend angeordnet. Sind drei Federelemente vorgesehen, so weisen auch diese einen im Wesentlichen gleichen Abstand zueinander auf.

Vorzugsweise kann die Federkraft der Federelemente über die Höhe der axialen Erhebung und die Steifheit des eingesetzten Federelementmaterials bestimmt werden. Die Federkraft kann aber auch über die Anzahl der vorhandenen Federelemente eingestellt werden. Dabei gilt, dass sich die Federkraft erhöht, wenn mehr Federelemente vorhanden sind. Dies hat insbesondere den Vorteil, dass je nach Anforderung an die zu fertigende Kupplung die Federkennlinie des Federelements einfach und kostengünstig angepasst werden kann.

Weitere Vorteile und bevorzugte Ausführungsformen sind in den Unteransprüchen, der Beschreibung und den Zeichnungen definiert.

Die Erfindung ist nachfolgend beispielhaft ohne Beschränkung der Allgemeinheit anhand von in den Zeichnungen dargestellten Ausführungsbeispielen näher erläutert.

Es zeigen:
Figur 1: eine schematische Aufsicht auf einen Ausschnitt einer Reibungskupplung gemäß einem ersten Ausführungsbeispiel vorliegender Erfindung;
Figur 2: eine schematische Aufsicht auf ein erstes Ausführungsbeispiel des erfindungsgemäßen Federelements;
Figur 3: eine schematische Schnittansicht durch die in Figur 1 dargestellte Reibungskupplung entlang der Schnittlinie I;
Figur 4: eine schematische Schnittansicht durch die in Figur 1 dargestellte Reibungskupplung entlang der Schnittlinie II; und
Figur 5: eine schematische Aufsicht auf ein zweites Ausführungsbeispiel des erfindungsgemäßen Federelements.

Im Folgenden werden gleichartige oder gleichwirkende Elemente mit den gleichen Bezugszeichen bezeichnet.

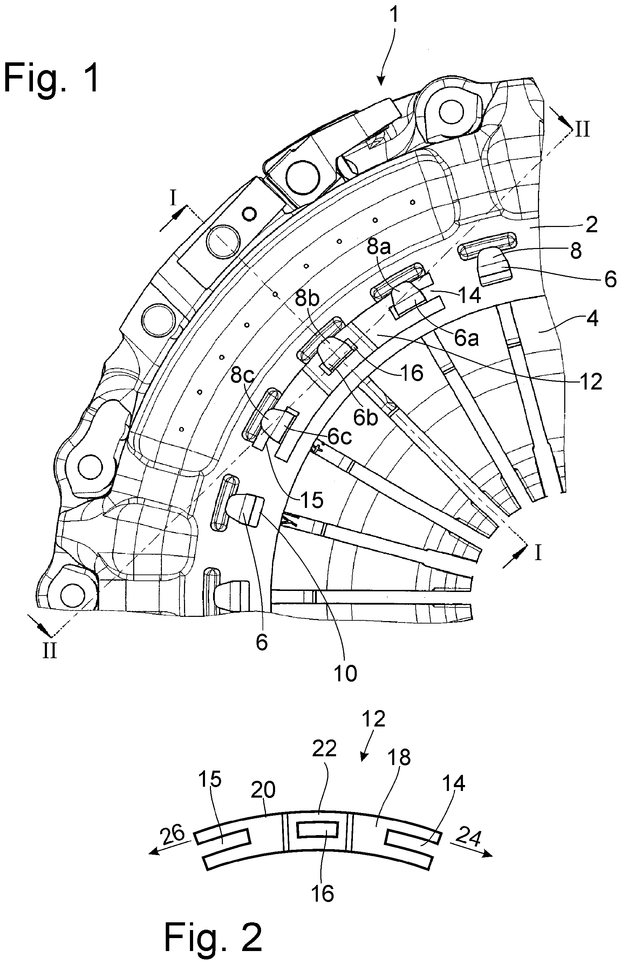

Figur 1 zeigt eine schematische Aufsicht auf einen Teil einer Reibungskupplung 1 mit einem Kupplungsgehäuse 2, das eine Membranfeder 4 umfasst. Die Membranfeder 4 und das Kupplungsgehäuse 2 sind mittels eines Halterings 5 aneinander festgelegt. Von dem Haltering 5 sind allerdings in Fig. 1 nur die umfänglich verteilten axial abstehenden Haltelaschen 6 sichtbar. Die Haltelaschen 6 sind radial nach außen umgebogen, so dass sie einen axialen Anschlag 8 ausbilden. Statt der axial nach außen umgebogenen Laschenenden, können die Haltelaschen 6 auch radial nach innen oder umfänglich im oder gegen den Uhrzeigersinn umgebogen werden, um den axialen Anschlag 8 zu definieren.

Die Haltelaschen 6 werden bei der Montage durch Öffnungen (nicht dargestellt) in der Membranfeder 4 und Öffnungen 10 in dem Kupplungsgehäuse 2 geführt und dann fixiert, so dass die Membranfeder an dem Kupplungsgehäuse festgelegt ist.

Wie Figur 1 und der in Fig. 2 dargestellten detaillierten Ansicht des Federelements 12 zu entnehmen ist, ist zwischen dem Kupplungsgehäuse 2 und den axialen Anschlägen 8a bis 8c dreier nebeneinander liegender Haltelaschen 6a bis 6c ein Federelement 12 angeordnet, das erfindungsgemäß dazu ausgelegt ist, einen Verschleiß auszugleichen. Bei dem hier dargestellten Ausführungsbeispiel umspannt das Federelement 12 drei Halteelemente 6a, 6b, 6c, wobei die Halteelemente 6a und 6c von randseitigen Führungen 14, 15 umgriffen werden, während das Halteelement 6b die mittig angeordnete Aussparung 16 durchsetzt. Die randseitigen Führungen sind dabei in Abstützbereichen 18, 20 angeordnet, während die Öffnung 16 in einer axialen Erhebung 22 ausgebildet ist.

Diese Erhebung 22 wird bei der Montage beim Umbiegen der Haltelaschen 6 in Richtung Kupplungsgehäuse 2 gedrückt, so dass die Federvorspannung entsteht.

Statt wie hier drei Haltelaschen 6a bis 6c zu umspannen, kann das Federelement 12 auch vier oder mehr Haltelaschen 6 umspannen. Es ist jedoch auch möglich, dass das Federelement 12 lediglich an einer der Haltelaschen 6 angeordnet ist und sich nicht bis zu den benachbarten Haltelaschen erstreckt. Sollen an jeder Haltelasche derartige Federelemente angebracht sein, werden vorzugsweise die Abstützbereiche 18, 20 derart dimensioniert, dass sie sich bei Bewegung die Federelemente nicht gegenseitig blockieren.

Das Federelement 12 weist des Weiteren eine in etwa mittig angeordnete Öffnung 16 auf, die von einer Haltelasche 6b durchsetzt ist. Dabei ist die Haltelasche 6b an der axialen Erhebung 22 des Federelements 12 angeordnet. In dem hier dargestellten Ausführungsbeispiel liegt die axiale Erhebung 22 an dem axialen Anschlag 8b der Haltelasche 6b an, während sich die Abstützbereiche 18, 20 an dem Kupplungsgehäuse 2 abstützen. Natürlich ist es auch möglich, dass die axiale Erhebung 22 am Kupplungsgehäuse 2 anliegt, während sich die Abstützbereiche 18, 20 an den axialen Anschlägen 8a und 8c abstützen.

Die randseitigen Führungen 14, 15 können, wie hier dargestellt, als randseitig offen ausgebildet sein, so dass sie eine Nutform aufweisen. Diese Ausbildungsform hat den Vorteil, dass bei der Montage des Federelements 12 auch bei in Umfangsrichtung nicht exakter Positionierung des Federelements 12 eine Beweglichkeit der Haltelaschen 6a, 6c in den Führungen 14, 15 möglich ist.

Wie Figur 2 des Weiteren zu entnehmen ist, weist das erfindungsgemäße Federelement 12 eine axiale Erhebung 22 auf, die in dem hier dargestellten Ausführungsbeispiel die Öffnung 16 zur Aufnahme der Haltelasche 6b aufweist. Die Öffnung 16 ist vorzugsweise als Langloch ausgebildet, das entsprechend den Abmessungen der Haltelasche 6b dimensioniert ist.

Die Höhe der axialen Erhebung 22, die Steifigkeit des Materials des Federelements 12 und die Anzahl der umfänglich über die Kupplung verteilten Federelemente 12 bestimmen die Gesamtfederkraft, die das Federelement aufbringt.

Die Federvorspannung entsteht durch das Zusammendrücken bzw. die Verringerung der axialen Erhebung 22 beim Umbiegen der Haltelaschen 6. Dabei wird das Federelement 12 in Richtung der Pfeile 24, 26 auseinandergedrückt, so dass eine tangential zur axialen Erhebung 22 ausgerichtete Relativbewegung zwischen den Abstützbereichen 18, 20 und den in den Führungen 14, 15 aufgenommenen Haltelaschen 6a, 6c entsteht. Tritt Verschleiß auf, entsteht Spiel zwischen Haltering 5, Membranfeder 4 und Gehäuse 2, so dass sich das Federelement 12 zu entspannen beginnt und wieder zusammenzieht, so dass wiederum eine Relativbewegung der Halteelemente 6a, 6c in den Führungen 14, 15 entsteht. Aus diesem Grund sind die Führungen 14, 15 vorzugsweise derart dimensioniert sein, dass eine Beweglichkeit der Haltelaschen 6a, 6c gewährleistet ist.

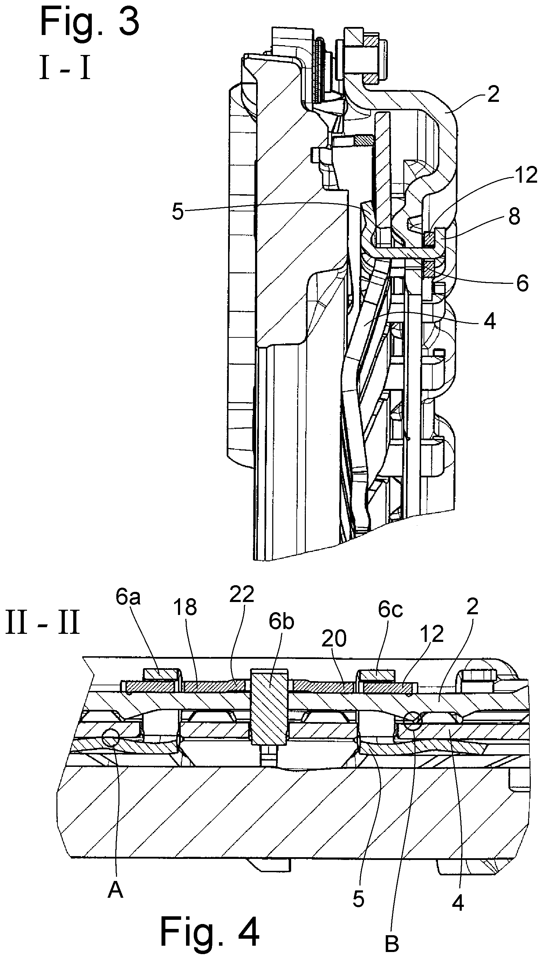

Figur 3 zeigt eine Schnittansicht durch die in Figur 1 dargestellte Reibungskupplung entlang der Linie I. Wie der Schnittansicht von Figur 3 zu entnehmen ist, liegt das Federelement 12 zwischen dem Kupplungsdeckelgehäuse 2 und dem axialen Anschlag 8 der Haltelaschen 6, während der Haltering 5 an der Membranfeder 4 anliegt. Entsteht zwischen dem Haltering 5 bzw. dem axialen Anschlag 8 der Haltelaschen 6 und der Membranfeder 4 aufgrund von Verschleiß ein Spiel, kann sich die axiale Erhebung 22 des Federelements 12 entspannen und den entstandenen Raum ausfüllen.

Figur 4 zeigt ebenfalls eine Schnittansicht durch die in Figur 1 dargestellte Reibungskupplung, entlang der Linie II.

Wie Figur 4 zu entnehmen ist, kann die axiale Erhebung 22 derart ausgebildet sein, dass sie sich am axialen Anschlag 8 der Haltelasche 6 abstützt, während die Abstützbereiche 18, 20 am Kupplungsgehäuse 2 anliegen. Wie bereits erwähnt, ist es jedoch auch möglich, die Federvorrichtung 12 umzudrehen, so dass sich die axiale Erhebung 22 am Kupplungsgehäuse 2 abstützt, während die Abstützbereiche 18, 20 gegen die axialen Anschläge 8 der Haltelaschen 6 drücken.

Statt einer Anordnung des Federelements 12 zwischen dem Kupplungsgehäuse 2 und dem axialen Anschlag 8 der Haltelaschen 6 kann das Federelement 12 auch zwischen Haltering 5 und Membranfeder 4 oder zwischen Membranfeder 4 und Gehäuse 2 angeordnet sein. Beide Positionsmöglichkeiten sind in Figur 4 mit A bzw. B gekennzeichnet. Je nach Einbaulage ist es dabei vorteilhaft die axiale Erhebung 22 und die Abstützbereiche 18, 20 an die baulichen Gegebenheiten anzupassen.

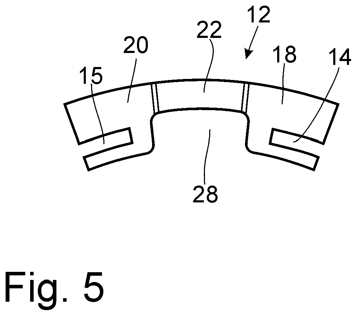

Beispielsweise ist es bei einer Anordnung des Federelements 12 zwischen Haltering 5 und Membranfeder 4 vorteilhaft, wenn, wie in Figur 5 zu sehen, die Aussparung in der axialen Erhebung 22 nicht als Öffnung 16 sondern als Einbuchtung 28 ausgebildet ist. Wie Figur 5 weiterhin zu entnehmen ist, weist auch in diesem Fall das Federelement 12 Führungen 14 und 15 auf, die die Haltelaschen 6 umgreifen und eine Abstützung an der Membranfeder 4 bereitstellen. Die axiale Erhebung 22 stützt sich am Haltering 5 ab, so dass wiederum bei Verschleiß das Spiel zwischen Membranfeder 4 und den umgebenden Bauelementen ausgeglichen ist.

Statt wie in den Figuren dargestellt, kann das Federelement 12 auch zwei oder mehr axiale Erhebungen 22 mit jeweils einem dazwischen angeordneten weiteren Abstützbereich umfassen, so dass statt der drei umgriffenen Haltelaschen vier oder mehr Haltelaschen umgriffen werden können. Dabei wird durch die mittleren Aussparungen bei der Montage jeweils eine Haltelasche 6 des Halterings 5 geschoben und umgebogen. Dadurch werden die axialen Erhebungen 22 des Federelements 12 zusammengedrückt, so dass eine Federvorspannung entsteht.

### Bezugszeichenliste:

- 1: Kupplungsbaugruppe
- 2: Kupplungsgehäuse
- 4: Membranfeder
- 5: Haltering mit
- 6: Haltelasche
- 8: axialem Anschlag der Haltelaschen
- 10: Öffnung in Kupplungsgehäuse
- 12: Federelement
- 14, 15: Führung
- 16: Aussparung, insbesondere Langloch
- 18, 20: Abstützbereich
- 22: axiale Erhebung
- 24, 26: tangentiale Bewegungsrichtung des Federelements
- 28: Einbuchtung

## Patentansprüche

1. Kupplungsbaugruppe (1), insbesondere für eine Reibungskupplung eines Kraftfahrzeugs, mit zumindest einem Kupplungsgehäuse (2), in dem eine auf eine Druckplatte wirkende Membranfeder (4) angeordnet ist, die am Kupplungsgehäuse (2) mittels eines Halterings (5) mit umfänglich verteilten axial vom Haltering (5) abstehenden Haltelaschen (6) festgelegt ist, wobei die Haltelaschen (6) dazu ausgelegt sind, einen axialen Anschlag (8) zu definieren, und wobei zwischen zwei benachbarten Bauteilen der Kupplungsbaugruppe (1), nämlich zwischen dem axialen Anschlag (8) der Haltelaschen (6) und dem Kupplungsgehäuse (2) oder zwischen dem Haltering (5) und der Membranfeder (4) oder zwischen dem Kupplungsgehäuse (2) und der Membranfeder (4) ein Federelement (12) angeordnet ist, das eine axiale Federkraft auf die benachbarten Bauteile ausübt, wobei das Federelement (12) an mindestens einer Haltelasche (6) angeordnet ist und mindestens zwei randseitige Abstützbereiche (18, 20) aufweist, die sich in Richtung der benachbarten Haltelaschen (6) erstrecken und zumindest teilweise an dem einen Bauteil anliegen, und weiterhin mindestens eine zwischen den Abstützbereichen (18, 20) angeordnete axiale Erhebung (22) aufweist, die zumindest teilweise an dem anderen Bauteil anliegt, **dadurch gekennzeichnet dass** das Federelement (12) kreisringabschnittsförmig ausgebildet ist.

2. Kupplungsbaugruppe (1) nach Anspruch 1, wobei die axiale Erhebung (22), vorzugsweise an ihrem Scheitelbereich, mindestens eine Aussparung (16; 30) für eine Haltelasche (6) aufweist.

3. Kupplungsbaugruppe (1) nach einem der vorhergehenden Ansprüche, wobei mindestens einer der randseitigen Abstützbereiche (18, 20) eine Führung (14, 15) aufweist, die eine der axialen Erhebung (22) benachbarte Haltelasche (6) umgreift.

4. Kupplungsbaugruppe (1) nach Anspruch 3, wobei beide randseitigen Abstützbereiche (18, 20) jeweils eine Führung (14, 15) aufweisen.

5. Kupplungsbaugruppe (1) nach Anspruch 3 oder 4, wobei die mindestens eine randseitige Führung (14, 15) derart ausgebildet ist, dass eine Beweglichkeit der randseitigen Führung (14, 15) entlang der von ihr umfassten Haltelasche (6) gegeben ist.

6. Kupplungsbaugruppe (1) nach einem der Ansprüche 3 bis 5, wobei mindestens eine der mindestens einen randseitigen Führung (14, 15) randseitig offen ausgebildet ist.

7. Kupplungsbaugruppe (1) nach einem der Ansprüche 3 bis 6, wobei mindestens eine der mindestens einen randseitigen Führung (14, 15) als Öffnung, insbesondere als Langloch ausgebildet ist

8. Kupplungsbaugruppe (1) nach einem der vorhergehenden Ansprüche, wobei das Federelement (12) zwei oder mehr axiale Erhebungen (22) aufweist, die jeweils mindestens eine Aussparung (16; 30) aufweisen, wobei zwischen den axialen Erhebungen (22) jeweils ein weiterer Abstützbereich angeordnet ist.

9. Kupplungsbaugruppe (1) nach dem vorhergehenden Anspruch, wobei die Aussparung (16; 30) in der axialen Erhebung (22) als Öffnung (16), insbesondere als Langloch, ausgebildet ist, die vorzugsweise derart dimensioniert ist, dass in ihr eine Haltelasche (6) aufnehmbar ist.

10. Kupplungsbaugruppe (1) nach einem der beiden vorhergehenden Ansprüche, wobei die Aussparung (16; 30) als radiale Einbuchtung (30) ausgebildet ist, die sich vorzugsweise über die gesamte axiale Erhebung (22) erstreckt.

11. Kupplungsbaugruppe (1) nach einem der vorhergehenden Ansprüche, wobei mindestens zwei separate Federelemente (12) vorgesehen sind, die vorzugsweise einander gegenüberliegend angeordnet sind.

12. Kupplungsvorrichtung nach einem der vorhergehenden Ansprüche, wobei die Federkraft des/r Federelements/e (12) über die Anzahl der vorhandenen Federelemente (12) und/oder die Höhe der axialen Erhebung (22) jedes Federelements (12) und/oder die Steifheit des Federelementmaterials bestimmbar ist.

## Claims

1. Clutch assembly (1), in particular for a friction clutch of a motor vehicle, having at least one clutch housing (2), in which a diaphragm spring (4) is arranged which acts in a pressure plate and is fixed on the clutch housing (20 by means of a securing ring (5) with circumferentially distributed securing brackets (6) which project axially from the securing ring (5), the securing brackets (6) being designed to define an axial stop (8), and a spring element (12) being arranged between two adjacent components of the clutch assembly (1), namely between the axial stop (8) of the securing brackets (6) and the clutch housing (2) or between the securing ring (5) and the diaphragm spring (4) or between the clutch housing (2) and the diaphragm spring (4), which spring element (12) exerts an axial spring force on the adjacent components, the spring element (12) being arranged on at least one securing bracket (6) and having at least two edge-side supporting regions (18, 20) which extend in the direction of the adjacent securing brackets (6) and bear at least partially against the one component, and having, furthermore, at least one axial elevation (22) which is arranged between the supporting regions (18, 20) and bears at least partially against the other component, **characterized in that** the spring element (12) is of circularly annular section-shaped configuration.

2. Clutch assembly (1) according to Claim 1, the axial elevation (22) having, preferably on its vertex region, at least one cut-out (16; 30) for a securing bracket (6).

3. Clutch assembly (1) according to either of the preceding claims, at least one of the edge-side supporting regions (18, 20) having a guide (14, 15) which engages around a securing bracket (6) which is adjacent to the axial elevation (22).

4. Clutch assembly (1) according to Claim 3, the two edge-side supporting regions (18, 20) having in each case one guide (14, 15).

5. Clutch assembly (1) according to Claim 3 or 4, the at least one edge-side guide (14, 15) being configured in such a way that there is a movability of the edge-side guide (14, 15) along the securing bracket (6) which is enclosed by it.

6. Clutch assembly (1) according to one of Claims 3 to 5, at least one of the at least one edge-side guide (14, 15) being of open configuration on the edge side.

7. Clutch assembly (1) according to one of Claims 3 to 6, at least one of the at least one edge-side guide (14, 15) being configured as an opening, in particular as a slot.

8. Clutch assembly (1) according to one of the preceding claims, the spring element (12) having two or more axial elevations (22) which in each case have at least one cut-out (16; 30), in each case one further supporting region being arranged between the axial elevations (22).

9. Clutch assembly (1) according to the preceding claim, the cut-out (16; 30) in the axial elevation (22) being configured as an opening (16), in particular as a slot, which is preferably dimensioned in such a way that a securing bracket (6) can be received in it.

10. Clutch assembly (1) according to either of the two preceding claims, the cut-out (16; 30) being configured as a radial indentation (30) which preferably extends over the entire axial elevation (22).

11. Clutch assembly (1) according to one of the preceding claims, at least two separate spring elements (12) being provided which are preferably arranged so as to lie opposite one another.

12. Clutch apparatus according to one of the preceding claims, it being possible for the spring force of the spring element/elements (12) to be defined via the number of existing spring elements (12) and/or the height of the axial elevation (22) of each spring element (12) and/or the stiffness of the spring element material.

## Revendications

1. Ensemble d'embrayage (1), en particulier pour un embrayage à friction d'un véhicule automobile, comprenant au moins un carter d'embrayage (2) dans lequel est disposé un ressort diaphragme (4) agissant sur un plateau de pression, lequel ressort diaphragme est fixé sur le carter d'embrayage (2) au moyen d'une bague de retenue (5) dotée de languettes de retenue (6) faisant saillie axialement à partir de la bague de retenue (5) et réparties de manière périphérique, les languettes de retenue (6) étant conçues pour définir une butée axiale (8), et un élément ressort (12) étant disposé entre deux composants adjacents de l'ensemble d'embrayage (1), à savoir entre la butée axiale (8) des languettes de retenue (6) et le carter d'embrayage (2) ou entre la bague de retenue (5) et le ressort diaphragme (4) ou entre le carter d'embrayage (2) et le ressort diaphragme (4), lequel élément ressort exerce une force de ressort axiale sur les composants adjacents, l'élément ressort (12) étant disposé sur au moins une languette de retenue (6) et comprenant au moins deux zones de support (18, 20) du côté des bords, lesquelles zones de support s'étendent en direction des languettes de retenue (6) adjacentes et s'appliquent au moins partiellement contre l'un des composants, et comprenant en outre au moins un rehaussement axial (22) disposé entre les zones de support (18, 20), lequel rehaussement s'applique au moins partiellement contre l'autre composant, **caractérisé en ce que** l'élément ressort (12) est réalisé en forme de segment d'anneau circulaire.

2. Ensemble d'embrayage (1) selon la revendication 1, dans lequel le rehaussement axial (22) comprend, de préférence au niveau de sa zone de sommet, au moins un évidement (16 ; 30) pour une languette de retenue (6).

3. Ensemble d'embrayage (1) selon l'une quelconque des revendications précédentes, dans lequel au moins l'une des zones de support (18, 20) du côté des bords comprend un guide (14, 15) qui enveloppe une languette de retenue (6) adjacente au rehaussement axial (22).

4. Ensemble d'embrayage (1) selon la revendication 3, dans lequel les deux zones de support (18, 20) du côté des bords comprennent respectivement un guide (14, 15).

5. Ensemble d'embrayage (1) selon la revendication 3 ou 4, dans lequel ledit au moins un guide (14, 15) du côté des bords est réalisé de telle sorte qu'une mobilité du guide (14, 15) du côté des bords le long de la languette de retenue (6) enserrée par celui-ci existe.

6. Ensemble d'embrayage (1) selon l'une quelconque des revendications 3 à 5, dans lequel au moins l'un du ou des guides (14, 15) du côté des bords est réalisé de manière ouverte du côté du bord.

7. Ensemble d'embrayage (1) selon l'une quelconque des revendications 3 à 6, dans lequel au moins l'un du ou des guides (14, 15) du côté des bords est réalisé sous forme d'ouverture, en particulier sous forme de trou oblong.

8. Ensemble d'embrayage (1) selon l'une quelconque des revendications précédentes, dans lequel l'élément ressort (12) comprend deux ou plus de deux rehaussements axiaux (22) qui comprennent respectivement au moins un évidement (16 ; 30), dans lequel une autre zone de support est disposée respectivement entre les rehaussements axiaux (22) .

9. Ensemble d'embrayage (1) selon la revendication précédente, dans lequel l'évidement (16 ; 30) dans le rehaussement axial (22) est réalisé sous forme d'ouverture (16), en particulier sous forme de trou oblong, lequel/laquelle est dimensionné(e) de préférence de telle sorte qu'une languette de retenue (6) peut être reçue dans celui-ci/celle-ci.

10. Ensemble d'embrayage (1) selon l'une des deux revendications précédentes, dans lequel l'évidement (16 ; 30) est réalisé sous forme de renfoncement radial (30) qui s'étend de préférence sur tout le rehaussement axial (22).

11. Ensemble d'embrayage (1) selon l'une quelconque des revendications précédentes, dans lequel au moins deux éléments ressorts séparés (12) sont prévus, lesquels sont disposés de préférence de manière opposée les uns aux autres.

12. Ensemble d'embrayage selon l'une quelconque des revendications précédentes, dans lequel la force de ressort de l'élément ressort ou des éléments ressorts (12) peut être déterminée par le biais du nombre d'éléments ressorts (12) présents et/ou de la hauteur du rehaussement axial (22) de chaque élément ressort (12) et/ou de la rigidité du matériau d'élément ressort.
